# FASCICULE DE BREVET EUROPEEN

(11) **EP 3 161 302 B1**
(45) Date de publication et mention de la délivrance du brevet: **25.12.2019**
(21) Numéro de dépôt: 15731946.8
(22) Date de dépôt: 26.06.2015
(51) Int. Cl.: F02N 11/04, F02C 7/268, F02C 7/275, H02H 7/06

(54) **CIRCUIT DE DEMARRAGE POUR GENERATRICE-DEMARREUR TROIS BORNES ET PROCEDE DE DEMARRAGE**
ANLAUFSCHALTUNG FÜR GENERATOR-ANLASSER MIT DREI ANSCHLÜSSEN UND STARTVERFAHREN
STARTING CIRCUIT FOR GENERATOR-STARTER WITH THREE TERMINALS AND STARTING METHOD

(30) Priorité: 27.06.2014 FR 1401453
(43) Date de publication de la demande: 03.05.2017
(73) Titulaire: Thales, 92400 Courbevoie (FR)
(72) Inventeur: DEMUYNCK, Damien, F-78400 Chatou (FR)
(74) Mandataire: Collet, Alain
(86) Numéro de dépôt international: PCT/EP2015/064584
(87) Numéro de publication internationale: WO 2015/197845

(56) Documents cités:
- FR-A1- 2 713 843
- GB-A- 2 314 177
- US-A- 3 493 776
- US-A- 5 051 670

## Description

L'invention concerne un circuit de démarrage pour une génératrice-démarreur trois bornes. La génératrice-démarreur trois bornes est utilisée comme démarreur pour le démarrage des turboréacteurs, turbopropulseurs, turbomoteurs d'usage aéronautique et comme générateurs principaux des réseaux électriques de bord des avions, des hélicoptères et des drones. Dans la présente demande, nous parlerons d'une génératrice-démarreur trois bornes montée sur une turbine. L'invention concerne aussi un procédé de démarrage d'une telle génératrice-démarreur. Les documents US 3,493,776 et US 5,051,670 sont des exemples de l'état de la technique.

La génératrice-démarreur trois bornes est une machine électrique qui fonctionne en mode démarreur pour démarrer la turbine, puis en mode génératrice pour fournir la puissance électrique nécessaire au réseau de bord ou tout autre système nécessitant une puissance électrique. Par la suite, nous nous intéresserons particulièrement au mode démarreur. On peut définir une phase de démarrage par une phase pendant laquelle la génératrice-démarreur trois bornes fonctionne en mode démarreur. Le début de la phase de démarrage est initié par la fermeture du contacteur de démarrage. La fin de la phase de démarrage est atteinte lorsque la turbine atteint la vitesse de fin de démarrage. Le choix de la génératrice-démarreur trois bornes à monter sur une turbine donnée se fait notamment en tenant compte de sa capacité de démarrage et en fonction de la puissance électrique exigée par le réseau de bord.

La génératrice-démarreur trois bornes comprend un enroulement série qui fournit les ampères-tours en mode démarreur lorsque l'enroulement série est alimenté par une source de courant continu. L'enroulement série n'est pas alimenté en mode génératrice.

Une génératrice-démarreur dispose d'une section à casser, dont le couple est défini par le fabricant de turbine. En effet, en cas de couple développé par la génératrice-démarreur trop élevé, la section à casser agit comme un fusible mécanique afin de protéger la turbine.

Lors d'une phase de démarrage, une génératrice-démarreur développe un couple donné pour une intensité de courant maximale donnée. Pour certaines applications il a été remarqué que la marge entre le couple de la section à casser et le couple développé par la génératrice-démarreur est insuffisante engendrant une rupture de l'arbre de torsion de la génératrice-démarreur au niveau de la section à casser. Autrement dit, quand le couple initial de la génératrice-démarreur trois bornes pendant la phase de démarrage est trop élevé, la section à casser joue son rôle de fusible mécanique et casse afin de protéger la turbine.

Le couple de la section à casser étant défini par le fabricant de la turbine, il ne peut pas être augmenté sans l'accord du fabricant.

Afin d'éviter le problème de casse de l'arbre de torsion, comme le couple de la section à casser ne peut être augmenté, c'est le nombre de spires de l'enroulement série qui peut être diminué, diminuant ainsi le flux magnétique. Le couple développé par la génératrice-démarreur est donc réduit : cela nécessite de vérifier que le couple développé par la génératrice-démarreur présente suffisamment de la marge par rapport au couple résistant de la turbine afin de s'assurer que le temps de démarrage est acceptable. Mais diminuer le nombre de spires de l'enroulement série de la génératrice démarreur signifie également qu'il faut concevoir une nouvelle génératrice-démarreur.

L'invention vise à pallier tout ou partie des problèmes cités plus haut en proposant le procédé selon les revendications 1 à 3.

A cet effet, la description a pour objet une génératrice-démarreur trois bornes comprenant :
- une borne de puissance positive,
- une borne de puissance négative,
- une borne de démarrage positive,
- un enroulement d'induit, avec un collecteur
- des balais positifs frottant sur le collecteur de l'enroulement d'induit,
- des balais négatifs frottant sur le collecteur de l'enroulement d'induit,
- un enroulement de commutation possédant deux bornes, une première borne étant connectée aux balais négatifs, une seconde borne étant connectée à la borne de puissance,
- un enroulement série possédant deux bornes, une première borne étant connectée à la borne de démarrage, une seconde borne étant connectée à un point situé entre les balais positifs et la borne de puissance, l'enroulement série, l'enroulement d'induit et l'enroulement de commutation étant connectés en série,
- un enroulement shunt possédant deux bornes, une première borne étant connecté à une borne positive, une seconde borne étant connectée à un point situé entre les balais négatifs et la première borne de l'enroulement de commutation,
caractérisée en ce qu'elle comprend en outre un régulateur de tension possédant une première borne et une seconde borne,
et en ce que la première borne est connectée à la borne positive de l'enroulement shunt et la seconde borne est connectée à la borne de puissance positive.

L'invention a pour objet un procédé de démarrage d'une telle génératrice-démarreur trois bornes, caractérisé en ce qu'il comprend une étape d'alimentation de l'enroulement shunt pendant une durée prédéterminée de la phase de démarrage. Cette alimentation se fait par la connection de la borne positive de l'enroulement shunt accessible au bornier à la borne de puissance positive de la génératrice démarreur trois bornes de façon à ce que l'enroulement shunt et l'enroulement série soient reliés en parallèle.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un circuit de démarrage d'une génératrice-démarreur selon l'art antérieur ;
- la figure 2 représente une première variante du circuit de démarrage d'une génératrice-démarreur selon l'invention ;
- la figure 3 représente une deuxième variante du circuit de démarrage d'une génératrice-démarreur selon l'invention ;
- la figure 4 représente une troisième variante du circuit de démarrage d'une génératrice-démarreur qui permet d'effectuer des essais;
- la figure 5 représente une variante d'un procédé de démarrage d'une génératrice-démarreur selon l'invention.

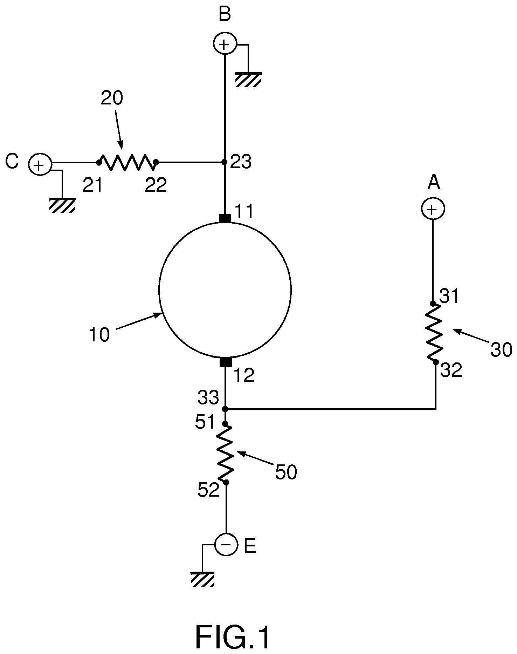

Par souci de clarté, les mêmes éléments porteront les mêmes repères dans les différentes figures. Sur les figures 1, 2, 3 et 4, la seconde borne de l'enroulement shunt 30 est connectée en un point situé entre les balais négatifs et la borne de l'enroulement des pôles de commutation connectée aux balais négatifs.

La figure 1 représente un circuit de démarrage d'une génératrice-démarreur selon l'art antérieur. La génératrice-démarreur trois bornes comprend une borne de puissance positive B, une borne de puissance négative E, une borne de démarrage positive C. Elle comprend en outre un enroulement d'induit 10 avec un collecteur, des balais positifs 11 frottant sur le collecteur de l'enroulement d'induit 10, des balais négatifs 12 frottant sur le collecteur de l'enroulement d'induit 10. La génératrice-démarreur trois bornes comprend un enroulement de commutation 50 possédant deux bornes 51, 52, une première borne 51 étant connectée aux balais négatifs 12, une seconde borne 52 étant connectée à la borne de puissance E. Elle comprend un enroulement série 20 possédant deux bornes 21, 22, une première borne 21 étant connectée à la borne de démarrage C, une seconde borne 22 étant connectée à un point 23 situé entre les balais positifs 11 et la borne de puissance B. L'enroulement série 20, l'enroulement d'induit 10 et l'enroulement de commutation 50 sont connectés en série. La génératrice-démarreur trois bornes comprend un enroulement shunt 30 possédant deux bornes 31, 32, une première borne 31 étant connecté à une borne positive A, une seconde borne 32 étant connectée à un point 33 situé entre les balais négatifs 12 et la première borne 51 de l'enroulement de commutation 50.

Pour certaines Génératrices-Démarreurs trois bornes la borne 32 de l'enroulement shunt 30 est connectée à la borne de puissance E. L'enroulement shunt 30 n'est pas alimenté en mode démarreur.

L'enroulement de commutation 50 permet de limiter, au niveau des balais 11 et 12, l'apparition d'étincelles qui pourraient endommager le collecteur de la génératrice-démarreur. L'enroulement de commutation 50 est connecté en série avec l'enroulement d'induit 10. L'enroulement 50 peut inclure en plus de l'enroulement de commutation, un enroulement de compensation pour certaines génératrices-démarreurs trois bornes.

On appellera la configuration représentée sur la figure 1 la configuration démarrage série.

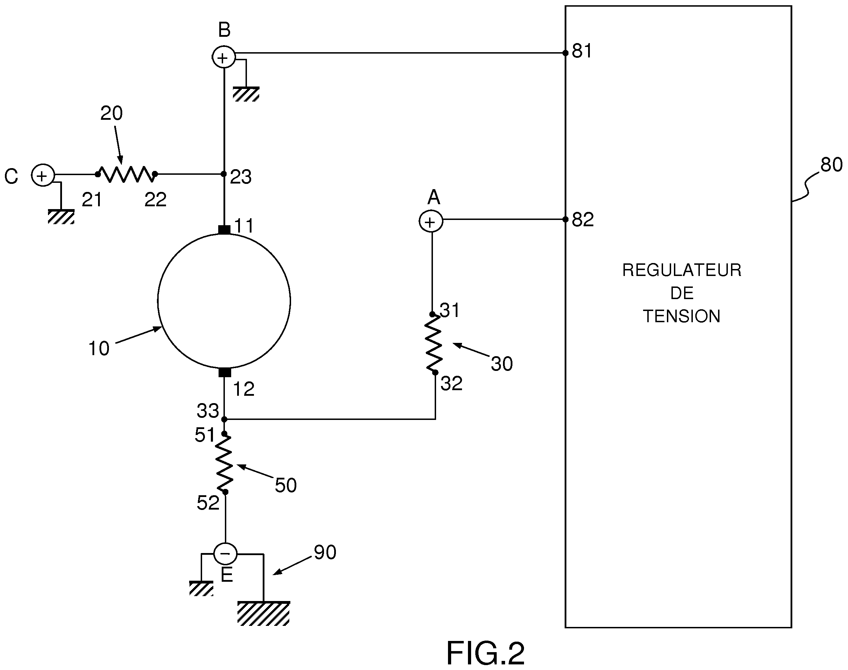

La figure 2 représente une première variante du schéma électrique du circuit de démarrage d'une génératrice-démarreur selon l'invention. Le circuit de démarrage selon l'invention représenté sur la figure 2 comprend les mêmes éléments que le circuit de démarrage représenté sur la figure 1. Selon l'invention, la génératrice-démarreur comprend en outre un régulateur de tension 80 possédant une première borne 82 et une seconde borne 81. La première borne 82 est connectée à la borne positive A de l'enroulement shunt 30 et la seconde borne 81 est connectée à la borne de puissance positive B. Ainsi, l'enroulement shunt 30 et l'enroulement série 20 sont reliés en parallèle pendant toute la durée de la phase de démarrage. On appellera la configuration représentée sur la figure 2 la configuration série+shunt.

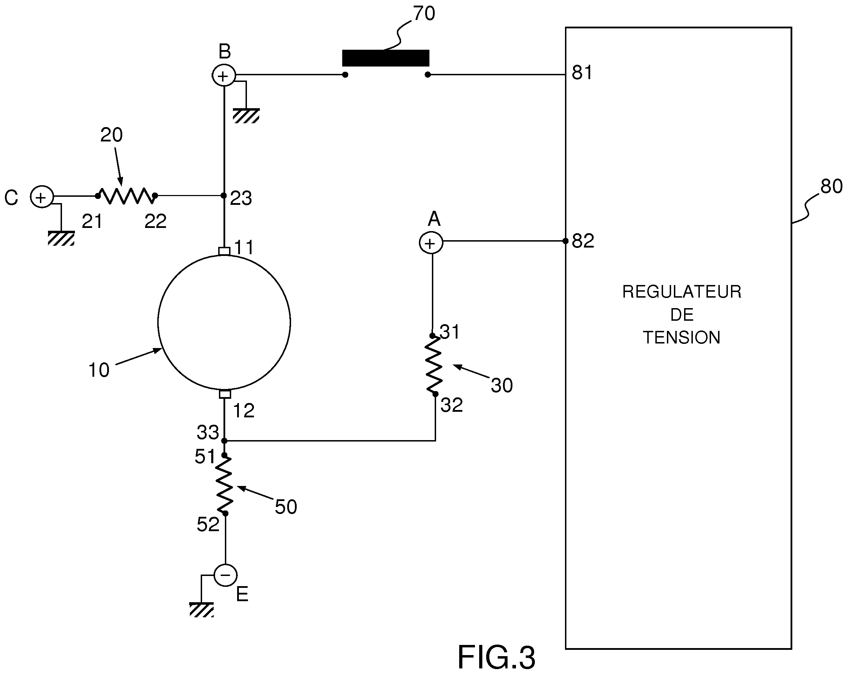

La figure 3 représente une deuxième variante du circuit de démarrage d'une génératrice-démarreur selon l'invention. Le circuit de démarrage représenté sur la figure 3 comprend les mêmes éléments que le circuit de démarrage représenté sur la figure 2. De plus, la génératrice trois bornes comprend un contacteur temporisé 70 inséré entre la borne B et la borne 81, de façon à ce que l'enroulement shunt 30 et l'enroulement série 20 soient reliés en parallèle pendant une durée prédéterminée d'une phase de démarrage. Le contacteur temporisé 70 assure l'alimentation de l'enroulement shunt 30 pendant une durée suffisante pour réduire le couple initial de la génératrice-démarreur en mode démarreur. Cette durée est de l'ordre de 500 ms, mais peut varier selon les génératrices-démarreurs et turbines mises en œuvre. Ensuite, le contacteur temporisé 70 est ouvert. La génératrice-démarreur fonctionne alors en démarreur série dont le circuit de démarrage est représenté sur la figure 1.

Le régulateur de tension 80 associé à une génératrice-démarreur trois bornes permet d'assurer si nécessaire, pour une tension d'équilibrage prédéfinie, une phase de défluxage, aussi appelée phase de fieldweakening. La tension d'équilibrage correspond à une image du courant principal à travers l'enroulement de commutation 50 et un câble d'avion négatif 90. La phase de défluxage permet de fonctionner à une puissance constante après l'allumage de la turbine.

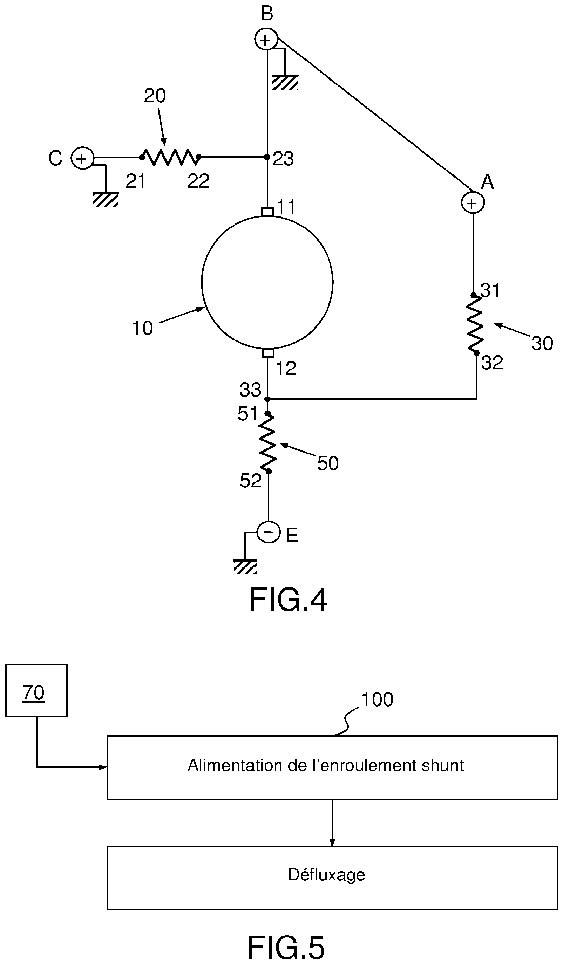

La figure 4 représente une autre variante du circuit de démarrage d'une génératrice-démarreur selon l'invention, variante simplifiée pour effectuer des tests. Des tests expérimentaux effectués suivant la figure 4 avec une résistance de 0.4 Ohm entre les bornes B et A en configuration série et en configuration série+shunt montrent que pour différentes valeurs d'intensité pendant la phase de démarrage, le couple initial est nettement plus faible pour la configuration série+shunt que pour la configuration série. Autrement dit, le circuit de démarrage selon l'invention permet de réduire le couple initial de la génératrice-démarreur trois bornes pendant la phase de démarrage. Par exemple, pour une intensité de 920 A, la configuration série+shunt permet d'obtenir un couple initial de 51 Nm qui est inférieur de 14% par rapport au couple de la configuration série de 58 Nm. Pour une intensité de 650 A, la réduction du couple initial avec la configuration série+shunt par rapport à la configuration série est de 28% (couple de 30 Nm pour la configuration série+shunt et 42 Nm pour la configuration série).

Plus précisément, lors de la phase de démarrage et en configuration série+shunt, il a été constaté que le courant d'excitation dans l'enroulement shunt 30 est négatif. Ainsi, les ampères-tours de l'enroulement shunt 30 sont soustractifs. Il s'agit d'un phénomène transitoire de couplage entre l'enroulement série 20 et l'enroulement shunt 30 de la génératrice-démarreur trois bornes.

Ainsi, le circuit de démarrage de la génératrice-démarreur trois bornes selon l'invention permet une réduction du couple initial de la génératrice-démarreur trois bornes pendant toute la durée de la phase de démarrage, ou pendant une durée prédéterminée, de la phase de démarrage. La marge entre le couple de la section à casser et le couple développé par la génératrice-démarreur est suffisante. Avec la réduction du couple initial, la turbine est moins sollicitée et il n'y a pas de pénalité de temps de démarrage.

Le procédé de démarrage de la génératrice-démarreur trois bornes B, E, C est apte à développer un couple prédéfini pendant la phase de démarrage pour démarrer au moyen d'un couple initial une turbine d'une vitesse nulle à une vitesse dite de fin de démarrage. Autrement dit, en début de la phase de démarrage, la turbine a une vitesse nulle et la génératrice-démarreur a pour objectif de l'entraîner, donc de la faire passer d'une vitesse nulle à une vitesse non nulle. En ce début de phase de démarrage, le courant d'excitation est maximal. Le problème qui se pose est la présence d'un couple initial élevé au courant maximal en tout début de la phase de démarrage. Le procédé selon l'invention permet de réduire le couple initial tout en permettant à la turbine de passer d'une vitesse nulle à la vitesse de fin de démarrage souhaitée. Comme expliqué précédemment, la marge entre le couple de la section à casser de la turbine et le couple initial développé par la génératrice-démarreur devient alors suffisante grâce au procédé selon l'invention.

La figure 5 représente une variante d'un procédé de démarrage d'une génératrice-démarreur selon l'invention. Le procédé de démarrage d'une génératrice-démarreur selon l'invention comprend une étape 100 d'alimentation de l'enroulement shunt 30 pendant toute la durée de la phase de démarrage. Dans le cas où la génératrice-démarreur comprend un contacteur temporisé 70, l'étape 100 d'alimentation de l'enroulement shunt 30 peut se faire pendant une durée prédéterminée de la phase de démarrage. Le procédé peut comprendre une phase de défluxage assurée par le régulateur de tension 80.

## Revendications

1. Procédé de démarrage d'une génératrice-démarreur trois bornes (B, E, C) apte à développer un couple prédéfini pendant une phase de démarrage pour démarrer au moyen d'un couple initial une turbine, comprenant :
• une borne de puissance positive (B)
• une borne de puissance négative (E)
• une borne de démarrage positive (C)
• un enroulement d'induit (10), avec un collecteur
• des balais positifs (11) frottant sur le collecteur de l'enroulement d'induit (10),
• des balais négatifs (12) frottant sur le collecteur de l'enroulement d'induit (10),
• un enroulement de commutation (50) possédant deux bornes (51, 52), une première borne (51) étant connectée aux balais négatifs (12), une seconde borne (52) étant connectée à la borne de puissance (E),
• un enroulement série (20) possédant deux bornes (21, 22), une première borne (21) étant connectée à la borne de démarrage (C), une seconde borne (22) étant connectée à un point (23) situé entre les balais positifs (11) et la borne de puissance (B), l'enroulement série (20), l'enroulement d'induit (10) et l'enroulement de commutation (50) étant connectés en série,
• un enroulement shunt (30) possédant deux bornes (31, 32), une première borne (31) étant connecté à une borne positive (A), une seconde borne (32) étant connectée à un point (33) situé entre les balais négatifs (12) et la première borne (51) de l'enroulement de commutation (50),
• un régulateur de tension (80) possédant une première borne (82) et une seconde borne (81), la première borne (82) étant connectée à la borne positive (A) de l'enroulement shunt (30) et la seconde borne (81) étant connectée à la borne de puissance positive (B),
**caractérisé en ce qu'**il comprend une étape d'alimentation de l'enroulement shunt (30) pendant une durée prédéterminée de la phase de démarrage, de façon à réduire le couple initial faisant passer la turbine d'une vitesse nulle à une vitesse dite de fin de démarrage.

2. Procédé de démarrage d'une génératrice-démarreur trois bornes (B, E, C) selon la revendication précédente, **caractérisé en ce qu'**il comprend une étape d'alimentation de l'enroulement shunt (30) pendant toute la durée de la phase de démarrage.

3. Procédé de démarrage selon la revendication 2, **caractérisé en ce qu'**il comprend une phase de défluxage assurée par le régulateur de tension (80).

## Patentansprüche

1. Anlaufverfahren für einen Generatoranlasser mit drei Klemmen (B, E, C), welches in der Lage ist, ein vorbestimmtes Moment während einer Anlaufphase zum Anlaufen einer Turbine mithilfe eines Anfangsmomentes zu erzeugen, Folgendes beinhaltend:
• eine positive Leistungsklemme (B)
• eine negative Leistungsklemme (E)
• eine positive Anlaufklemme (C)
• eine Ankerwicklung (10) mit einem Kollektor
• positive Bürsten (11), welche an dem Kollektor der Ankerwicklung (10) reiben,
• negative Bürsten (12), welche an dem Kollektor der Ankerwicklung (10) reiben,
• eine Umschaltwicklung (50), welche zwei Klemmen (51, 52) besitzt, wobei eine erste Klemme (51) mit den negativen Bürsten (12) verbunden ist, wobei eine zweite Klemme (52) mit der Leistungsklemme (E) verbunden ist,
• eine Reihenwicklung (20), welche zwei Klemmen (21, 22) besitzt, wobei eine erste Klemme (21) mit der Anlaufklemme (C) verbunden ist, wobei eine zweite Klemme (22) mit einem Punkt (23) verbunden ist, welcher sich zwischen den positiven Bürsten (11) und der Leistungsklemme (B) befindet, wobei die Reihenwicklung (20), die Ankerwicklung (10) und die Umschaltwicklung (50) in Reihe geschaltet sind,
• eine Nebenschlusswicklung (30), welche zwei Klemmen (31, 32) besitzt, wobei eine erste Klemme (31) mit einer positiven Klemme (A) verbunden ist, wobei eine zweite Klemme (32) mit einem Punkt (33) verbunden ist, welcher sich zwischen den negativen Bürsten (12) und der ersten Klemme (51) der Umschaltwicklung (50) befindet,
• einen Spannungsregler (80), welcher eine erste Klemme (82) und eine zweite Klemme (81) besitzt, wobei die erste Klemme (82) mit der positiven Klemme (A) der Nebenschlusswicklung (30) verbunden ist und die zweite Klemme (81) mit der positiven Leistungsklemme (B) verbunden ist,
**dadurch gekennzeichnet, dass** es einen Schritt des Speisens der Nebenschlusswicklung (30) über eine vorbestimmte Dauer der Anlaufphase in einer Weise beinhaltet, dass das Anfangsmoment reduziert wird, wodurch die Turbine von einer Geschwindigkeit gleich null auf eine sogenannte Anlaufgeschwindigkeit gebracht wird.

2. Anlaufverfahren für einen Generatoranlasser mit drei Klemmen (B, E, C) nach dem vorhergehenden Anspruch, **dadurch gekennzeichnet, dass** es einen Schritt des Speisens der Nebenschlusswicklung (30) über die gesamte Dauer der Anlaufphase beinhaltet.

3. Anlaufverfahren nach Anspruch 2, **dadurch gekennzeichnet, dass** es eine Flussabfallphase beinhaltet, welche durch den Spannungsregler (80) sichergestellt wird.

## Claims

1. A method for starting a generator-starter with three terminals (B, E, C) capable of developing a predefined torque during a starting phase for starting, by means of an initial torque, a turbine, comprising:
• a positive power terminal (B)
• a negative power terminal (E)
• a positive starting terminal (C)
• an armature winding (10), with a commutator
• positive brushes (11) rubbing on the commutator of the armature winding (10),
• negative brushes (12) rubbing on the commutator of the armature winding (10),
• a commutating winding (50) having two terminals (51, 52), a first terminal (51) being connected to the negative brushes (12), a second terminal (52) being connected to the power terminal (E),
• a series winding (20) having two terminals (21, 22), a first terminal (21) being connected to the starting terminal (C), a second terminal (22) being connected to a point (23) situated between the positive brushes (11) and the power terminal (B), the series winding (20), the armature winding (10) and the commutating winding (50) being connected in series,
• a shunt winding (30) having two terminals (31, 32), a first terminal (31) being connected to a positive terminal (A), a second terminal (32) being connected to a point (33) situated between the negative brushes (12) and the first terminal (51) of the commutating winding (50),
• a voltage regulator (80) having a first terminal (82) and a second terminal (81), the first terminal (82) being connected to the positive terminal (A) of the shunt winding (30) and the second terminal (81) being connected to the positive power terminal (B),
**characterized in that** it comprises a step of powering of the shunt winding (30) for a predetermined duration of the starting phase, so as to reduce the initial torque making the turbine switch from a zero speed to a so-called end-of-starting speed.

2. The method for starting a generator-starter with three terminals (B, E, C) as claimed in the preceding claim, **characterized in that** it comprises a step of powering of the shunt winding (30) throughout the duration of the starting phase.

3. The starting method as claimed in claim 2, **characterized in that** it comprises a defluxing phase ensured by the voltage regulator (80).
